# EUROPÄISCHE PATENTANMELDUNG

(11) **EP 4 091 915 A1**
(43) Veröffentlichungstag der Anmeldung: **23.11.2022**
(21) Anmeldenummer: 22172748.0
(22) Anmeldetag: 11.05.2022
(51) Int. Cl.: B62D 21/17, B62D 21/02

(54) **TRÄGERRAHMEN FÜR EIN NUTZFAHRZEUG UND VERFAHREN ZUR BEREITSTELLUNG VON MASSEANSCHLÜSSEN AN EINEM TRÄGERRAHMEN FÜR EIN NUTZFAHRZEUG**

(30) Priorität: 20.05.2021 DE 102021113121
(71) Anmelder: MAN Truck & Bus SE, 80995 München (DE)
(72) Erfinder: Braun, Reimar, 80995 München (DE)
(74) Vertreter: v. Bezold & Partner Patentanwälte - PartG mbB

(57) **Zusammenfassung**

Die Erfindung betrifft ein Verfahren zur Bereitstellung von Masseanschlüssen an einem Trägerrahmen für ein Nutzfahrzeug. Die Erfindung betrifft ferner einen Trägerrahmen für ein Nutzfahrzeug und ein Nutzfahrzeug mit einem solchen Trägerrahmen. Der Trägerrahmen (1) umfasst zwei voneinander beabstandete und über mehrere Querträger (3) miteinander verbundene Rahmen-Längsträger (2), wobei die mehreren Querträger (3) mit den Rahmen-Längsträgern (2) elektrisch leitend verbunden sind, vorzugsweise zur Erzeugung eines gemeinsamen elektrischen Bezugspotentials des Trägerrahmens (1).

## Beschreibung

Die Erfindung betrifft ein Verfahren zur Bereitstellung von Masseanschlüssen an einem Trägerrahmen für ein Nutzfahrzeug. Die Erfindung betrifft ferner einen Trägerrahmen für ein Nutzfahrzeug und ein Nutzfahrzeug mit einem solchen Trägerrahmen.

Aus der Praxis ist bekannt, dass Nutzfahrzeuge einen Trägerrahmen aufweisen, der zwei voneinander beabstandete und über mehrere Querträger miteinander verbundene RahmenLängsträger umfasst. Die Querträger sind insbesondere kraftschlüssig mit den Rahmenlängsträgern verbunden, weil aufgrund der im Fahrbetrieb auftretenden hohen mechanischen Belastung, z. B. Torsion des Trägerrahmens, ein Verschweißen nicht möglich ist. Schweißverfahren würden zudem durch den entstehenden Wärmeeintrag unerwünschte Materialspannungen erzeugen. Des Weiteren sind Rahmen-Längs- und -Querträger mit einer Oberflächenschicht, z. B. einer Lackierung geschützt, um eine Korrosion aufgrund von Umwelteinflüssen zu vermeiden. Diese Beschichtung wirkt als elektrische Isolierung und verhindert eine elektrisch leitende Verbindung zwischen Querträgern und Rahmen-Längsträgern, auch wenn diese kraftschlüssig miteinander verbunden sind.

Zur Verbindung der elektrischen Komponenten des Fahrzeugs mit einem gemeinsamen Masse- bzw. Bezugspotential (GND) ist aus der Praxis bekannt, nur an einem der RahmenLängsträger wenige, z. B. zwei, Masseverbindungen für Aufbaufunktionen bereitzustellen. Die Masseverbindungen weisen jeweils eine Masseschraube auf, an der die Kabel der anzuschließenden Aufbaufunktionen angeschlossen werden. Nachteilig hieran ist, dass je nach Montageposition der anzuschließenden Aufbaufunktion lange Verbindungskabel erforderlich sind, um die Masseverbindung zu erreichen. Diese langen Kabelwege, die erforderlich sind, um alle Aufbaufunktionen auf ein gemeinsames Bezugspotential (Massepotential) zu legen, erhöhen das Gewicht und die Kosten.

Mit dem zunehmenden Einsatz von Hochvolt-Komponenten, HV-Komponenten, in Nutzfahrzeugen, wie elektrische Antriebsmaschinen, Traktionsenergiespeicher, Hochvolt-Verteiler etc., machen sich diese Nachteile umso stärker bemerkbar. Das für HV-Komponenten verwendete Hochvolt-Netz, HV-Netz, ist in der Regel ein vollständig isoliertes Netz, ähnlich einem IT (Isole terre) -Netz. D. h. weder Plus- noch Minuspol des HV-Systems haben eine leitfähige Verbindung zur Fahrzeugmasse (Fahrgestell) oder zur Erde.

Zum Schutz vor einem elektrischen Schlag wird jedoch bei HV-Komponenten eines solchen HV-Systems eine gemeinsame Verbindung von leitfähigen Gehäuseteilen der HV-Komponenten zum Potentialausgleich hergestellt. Es müssen somit zusätzlich die Gehäuseteile von HV-Komponenten mit einem Masseanschluss verbunden werden. Die hierfür benötigten Kabel sind aufgrund der Querschnitte und Länge relativ schwer, was entsprechend die Kosten und das Gewicht weiter nachteilig erhöht.

Es ist somit eine Aufgabe der Erfindung, eine verbesserte Technik bereitzustellen, mit der Nachteile herkömmlicher Techniken zur Masseanbindung vermieden werden können. Die Aufgabe der Erfindung ist es insbesondere, einen kosten- und gewichtseffizienteren Ansatz bereitzustellen, um elektrische Komponenten eines Fahrzeugs mit einem gemeinsamen Masseoder Bezugspotential zu verbinden.

Diese Aufgaben werden durch Vorrichtungen und Verfahren mit den Merkmalen der unabhängigen Ansprüche gelöst. Vorteilhafte Weiterbildungen sind in den abhängigen Ansprüchen und der Beschreibung angegeben.

Ein erster allgemeinerer Gesichtspunkt der Erfindung betrifft einen Trägerrahmen, auch als Fahrgestellrahmen bezeichnet, für ein Nutzfahrzeug, der in an sich bekannter Weise zwei voneinander beabstandete und über mehrere Querträger miteinander verbundene RahmenLängsträger umfasst. Die Querträger sind insbesondere kraftschlüssig mit den Rahmenlängsträgern verbunden, vorzugsweise mittels Mutter-Schraube-Verbindungen.

Erfindungsgemäß sind mehrere Querträger oder zumindest ein Teil davon mit den RahmenLängsträgern elektrisch leitend verbunden, vorzugsweise zur Erzeugung eines gemeinsamen elektrischen Bezugspotentials (GND) des Trägerrahmens. Ein Grundgedanke der Erfindung besteht somit darin, die Querträger mit den Rahmen-Längsträgern sicher elektrisch leitend zu verbinden.

Dies bietet den Vorzug, dass nicht nur einer der Rahmen-Längsträger, sondern auch die Querträger genutzt werden können, um eine oder mehrere Masseanbindungsstelle/n bereitzustellen. Dies eröffnet mehr Möglichkeiten, zweckmäßig geeignete Masseanbindungsstellen vorzusehen, z. B. direkt an einem Querträger, falls eine elektrische Komponente z. B. am Querträger gehaltert ist. Entsprechend können die Kabellängen bis zur jeweils genutzten Masseanbindungsstelle deutlich reduziert und damit benötigtes Gewicht und benötigte Kosten für die Kabel verringert werden.

In einer bevorzugten Ausführungsform sind die Querträger jeweils mittels zweier Verbindungselemente mit den Rahmen-Längsträgern elektrisch leitend verbunden. Die Verbindungselemente können hierbei jeweils eine nicht-tragende elektrische Verbindung zwischen einem Querträger und einem Rahmen-Längsträger ausbilden, d. h. die Verbindungselemente übernehmen im Gegensatz zum Querträger und dem Rahmen-Längsträger keine tragende Funktion des Trägerrahmens.

Die Verbindungselemente können ferner hierbei jeweils eine in Bezug auf eine Torsion des Trägerrahmens torsionsfeste elektrische Verbindung zwischen einem Querträger und einem Rahmen-Längsträger ausbilden. Darunter soll verstanden werden, dass die elektrische Verbindung nicht von einer Torsion des Trägerrahmens beeinflusst oder beeinträchtigt wird. Die Verbindungselemente können eine zugentlastete elektrische Verbindung zwischen einem Rahmen-Längsträger und einem Querträger ausbilden.

Alternativ oder zusätzlich können die Verbindungselemente jeweils als eine elektrisch isolierte, flexible Leitung und/oder ein Kabel ausgeführt sein. Mittels einer solchen Leitung oder eines solchen Kabels kann schnell und kostengünstig eine sichere elektrisch leitende Verbindung zwischen einem Querträger und Rahmen-Längsträger hergestellt werden.

Die Leitungslänge und/oder die Kabellänge ist bevorzugt so gewählt, dass sie zugentlastet ist in Bezug auf übliche Torsionsbewegungen des Trägerrahmens. Beispielsweise kann die Leitungs- bzw. Kabellänge hierzu länger gewählt werden, als der direkte Abstand zwischen den Befestigungsstellen des Kabels am Querträger und Rahmen-Längsträger. Die Länge kann beispielweise so gewählt werden, dass auch bei Torsionsbewegungen des Trägerrahmens das Kabel nicht gespannt wird bzw. keinen merklichen Zug auf seine Befestigungsstellen am Trägerrahmen ausübt.

Das Verbindungselement, z. B. das Kabel, ist bevorzugt an einem Ende am jeweiligen Querträger und an seinem anderen Ende am jeweiligen Rahmen-Längsträger verbunden. Besonders bevorzugt ist, wenn die Enden an den gegenüberliegenden Schenkelflächen eines 90°-Winkelbereichs liegen, den ein Querträger endseitig mit einem der Rahmen-Längsträger ausbildet. Dies ermöglicht besonders kurze Verbindungswege zur Herstellung der elektrischen Verbindung.

Alternativ oder zusätzlich können die Verbindungselemente jeweils an einer Durchgangsöffnung am Rahmenlängsträger und an einer Durchgangsöffnung am Querträger verstiftet und/oder verschraubt und/oder vernietet sein, wobei die Durchgangsöffnungen Teil einer rasterförmigen Lochstruktur des Trägerrahmens sind.

Der Rahmen-Längsträger kann beispielsweise ein C-Profilträger sein. Der Trägerrahmen, insbesondere die Rahmen-Längsträger und die Querträger können eine rasterförmige Lochstruktur (Lochmaske) aufweisen. Die Lochstruktur umfasst rasterförmig angeordnete Durchgangsöffnungen. Diese Durchgangsöffnungen werden üblicherweise genutzt, um verschiedenste Komponenten des Nutzfahrzeugs mittels Mutter-Schraube-Verbindungen am Trägerrahmen zu montieren. Der Trägerrahmen ist mit einer Beschichtung versehen, z. B. mit einer Lackierung versehen. Die Beschichtung schützt den Trägerrahmen, um eine Korrosion aufgrund von Umwelteinflüssen zu vermeiden. Diese Beschichtung wirkt bevorzugt als elektrische Isolierung.

In einer weiteren Ausführungsform sind an den Rahmenlängsträgern und zumindest einem Teil der Querträger elektrische Masseanschlussstellen vorgesehen, die jeweils an einer Durchgangsöffnung der rasterförmigen Lochstruktur des Trägerrahmens vorgesehen sind. Die Masseanschlussstelle ermöglicht eine elektrische Verbindung zum Trägerrahmen. An der Masseanschlussstelle kann optional eine Masseanschlussschraube vorgesehen sein, die in der Durchgangsöffnung eingeschraubt ist.

Alternativ können diejenigen Masseanschlussstellen, die keine daran elektrisch angeschlossenen Komponenten aufweisen, d. h. die Masseanschlussstelle ist nicht genutzt, oder zumindest ein Teil dieser Masseanschlussstellen jeweils durch einen elektrisch nichtleitenden Verschlussstopfen (Blindstopfen) abgedeckt sein, der in der jeweiligen Masseanschlussstelle zugeordneten Durchgangsöffnung lösbar gehaltert ist.

Dies ist besonders vorteilhaft, wenn eine Vielzahl an Masseanschlussstellen verteilt am Trägerrahmen vorgesehen sind. Diese können durch einen Verschlussstopfen (Blindstopfen) so lange abgedeckt und vor Umwelteinflüssen geschützt werden, bis sie zum Masseanschluss einer elektrischen Komponente verwendet werden. Ferner erleichtern die Verschlussstopfen das Auffinden von zur Verfügung stehenden Masseanschlussstellen.

Vorstehend wurde festgestellt, dass der Trägerrahmen eine Beschichtung aufweist. Gemäß einem weiteren Aspekt kann die Beschichtung des Trägerrahmens im Bereich der elektrischen Masseanschlussstellen und/oder im Bereich von Befestigungsstellen der Verbindungselemente eine beschichtungsfreie, vorzugsweise lackierungsfreie, Stelle aufweisen. Dies erleichtert das sichere elektrische Verbinden an den Masseanschlussstellen bzw. den Befestigungsstellen der Verbindungselemente. Eine beschichtungsfreie Stelle ist eine Stelle, die bei der Beschichtung ausgespart wurde oder eine Stelle, an der die Beschichtung nachträglich wieder entfernt wurde.

Als bevorzugte Ausführungsform der letzten Variante kann die beschichtungsfreie Stelle mittels eine Mutter-Schraube-Verbindung erzeugt sein, wobei die Mutter-Schraube-Verbindung ausgebildet ist, mittels einer selbstschneidenden Schraube eine Beschichtung, z. B. eine Lackschicht, in einem Gewindegang zu entfernen und/oder bei einem Anzug der Mutter mit einem bestimmten Drehmoment eine Beschichtung, z. B. Lackschicht, zu entfernen und/oder zu durchbrechen. Diese Ausführungsform ist besonders vorteilhaft, um bei einem vollständig beschichteten Trägerrahmen nachträglich beschichtungsfreie Stellen zu schaffen.

In einer weiteren Ausführungsform kann der Trägerrahmen im Bereich der Befestigungsstellen und/oder der Masseanschlussstellen eine Markierung, z. B. ein Erdungs-Symbol, zur Kennzeichnung aufweisen. Die Markierung kann auf einer Abdeckkappe des Verschlussstopfens aufgebracht sein. Dies erleichtert das Auffinden der Masseanschlussstellen, insbesondere wenn hiervon eine Vielzahl am Trägerrahmen vorgesehen sind.

Die Erfindung betrifft ferner ein Nutzfahrzeug, aufweisend einen Trägerrahmen, wie er in diesem Dokument beschrieben ist. In diesem Fall kann es sich bei dem Kraftfahrzeug mit anderen Worten um ein Kraftfahrzeug handeln, das durch seine Bauart und Einrichtung zur Beförderung von Personen, zum Transport von Gütern oder zum Ziehen von Anhängerfahrzeugen ausgelegt ist. Beispielsweise kann es sich bei dem Kraftfahrzeug um einen Lastkraftwagen oder einen Sattelzug handeln, der vorzugsweise zumindest teilweise elektrisch angetrieben ist.

Das Nutzfahrzeug kann mehrere elektrische Komponenten, die über elektrische Masseanschlussstellen am Trägerrahmen mit einem gemeinsamen Bezugspotential elektrisch verbunden sind, umfassen. Die elektrischen Komponenten können Hochvolt-Komponenten (HV-Komponenten) umfassen. Wenn in diesem Dokument von einer elektrischen Anbindung einer HV-Komponente mit dem gemeinsamen Masse- bzw. Bezugspotential die Rede ist bzw. von dem Anschluss der HV-Komponente an die Masseanschlussstelle, ist dabei immer die elektrische Verbindung des Gehäuses der HV-Komponente mit dem Bezugspotential bzw. mit der Masseanschlussstelle gemeint, da, wie eingangs beschrieben, weder Plus- noch Minuspol des HV-Systems eine leitfähige Verbindung zur Fahrzeugmasse (Fahrgestell) oder zur Erde haben.

Die mehreren elektrischen Komponenten können zumindest eine erste Komponente aufweisen, die an einem der Querträger mechanisch gehaltert ist und mit dem gemeinsamen Bezugspotential über eine an diesem Querträger angeordnete Masseanschlussstelle elektrisch verbunden ist.

Die mehreren elektrischen Komponenten können ferner zumindest eine zweite Komponente aufweisen, die an einem der Rahmen-Längsträger mechanisch gehaltert ist und mit dem gemeinsamen Bezugspotential über eine im Bereich oder benachbart zu ihrer Halterung am Rahmenlängsträger angeordnete Masseanschlussstelle elektrisch verbunden ist.

Ferner können die mehreren Komponenten zumindest eine der folgenden Komponenten aufweisen: eine mittels einer Rahmenstruktur an den Trägerrahmen befestigte Hochvolt-Traktionsbatterie zur Bereitstellung elektrischer Antriebsenergie für das Nutzfahrzeug, einen Hochvoltverteiler, einen Hochvolt-Heizer, einen Bordnetzladewandler, ein Steuergerät, und eine elektrische Traktionsmaschine (E-Motor).

Gemäß einem zweiten allgemeinen Gesichtspunkt der Erfindung wird ein Verfahren zur Bereitstellung von Masseanschlüssen an einem Trägerrahmen für ein Nutzfahrzeug bereitgestellt. Der Trägerrahmen umfasst wiederum zwei voneinander beabstandete Rahmen-Längsträger und mehrere Querträger.

Das Verfahren zeichnet sich durch das elektrisch leitende Verbinden der mehreren Querträger mit den Rahmen-Längsträgern zur Sicherstellung eines Potentialausgleichs zwischen Rahmen-Längsträgern und Querträgern aus.

Zur Vermeidung von Wiederholungen sollen rein vorrichtungsgemäß offenbarte Merkmale auch als verfahrensgemäß offenbart gelten und beanspruchbar sein und umgekehrt. Die vorgenannten Aspekte und erfindungsgemäßen Merkmale, insbesondere im Hinblick auf die Ausbildung der elektrisch leitenden Verbindung zwischen Rahmen-Längsträger und Querträger gelten somit auch für das Verfahren.

Beispielsweise kann im Rahmen des Verfahrens jeder Querträger mittels zweier Verbindungselemente mit den Rahmen-Längsträgern elektrisch leitend verbunden werden. In Ausführungsvarianten hiervon können die Verbindungselemente jeweils eine nicht-tragende und/oder in Bezug auf eine Torsion des Trägerrahmens torsionsfeste elektrische Verbindung zwischen einem Querträger und einem Rahmen-Längsträger ausbilden. Ferner können die Verbindungselemente jeweils als eine elektrisch isolierte, flexible Leitung und/ oder ein Kabel ausgeführt sein und/oder an einer Durchgangsöffnung am Rahmenlängsträger und an einer Durchgangsöffnung am Querträger verstiftet und/oder verschraubt und/oder vernietet werden, wobei die Durchgangsöffnungen Teil einer rasterförmigen Lochstruktur des Trägerrahmens sind.

Vorstehend wurde bereits festgestellt, dass die Rahmen-Längsträger und Querträger beschichtet, z. B. lackiert werden, wobei diese mit einer vorzugsweise korrosionsbeständigen und/oder isolierenden Schutzschicht beschichtet werden.

In einer Ausführungsform des Verfahrens wird vor einem solchen Beschichtungsvorgang in mehrere Durchgangsöffnungen, die Teil einer rasterförmigen Lochstruktur des Trägerrahmens sind, und die als Masseanschlussstellen vorgesehen sind, jeweils ein Verschlussstopfen lösbar eingebracht. Dadurch kann verhindert werden, dass eine Innenwandung der Durchgangsöffnung, vorzugsweise ein Gewindegang, und/oder ein die Durchgangsöffnung umgebender Randbereich beim Beschichtungsvorgang beschichtet wird. Dadurch können auf einfache Weise mehrere mögliche Masseanschlussstellen verteilt über den Trägerrahmen vorbereitet werden.

Eine weitere Ausführungsform des Verfahrens umfasst ferner das Entfernen mindestens eines Verschlussstopfens zur Bereitstellung einer Masseanschlussstelle und das Herstellen einer Masseverbindung einer elektrischen Komponente an der bereitgestellten Masseanschlussstelle, vorzugsweise mittels einer Masseschraube, die ein Außengewinde am Schraubenflansch zum Anschluss von Kabeln aufweist. Eine Masseanschlussschraube weist ein Außengewinde am Schraubenflansch zum Anschluss von Kabeln auf, ohne die Schraube vorher vom Trägerrahmen lösen zu müssen.

Das Verfahren kann ferner folgende optionale Aspekte umfassen:
Die Montage der elektrischen Komponenten am Trägerrahmen und das elektrische Verbinden mit dem gemeinsamen Bezugs- bzw. Massepotential durch Verbindung mit einer Masseanschlussstelle, vorzugsweise mit der nächstgelegenen Masseanschlusssstelle.

Die Durchführung einer Prüfung, ob die Masseverbindung auch elektrisch leitend ist, und das Speichern und/oder Dokumentieren der Messung pro Fahrzeug für alle an das Bezugspotential angeschlossenen Komponenten.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Figuren beschrieben. Es zeigen:
- Figur 1: Trägerrahmen eines Nutzfahrzeugs, wobei die Querträger mit den Rahmen-Längs-trägern elektrisch leitend verbunden sind gemäß einer Ausführungsform der Erfindung; und
- Figur 2: eine Masseanschlussstelle gemäß einer Ausführungsform der Erfindung;
- Figur 3: schematisch den Aufbau einer HV-Komponente und deren Anbindung an ein Bezugspotential (GND);
- Figur 4: ein Nutzfahrzeug; und
- Figur 5: ein Ablaufdiagram zur Illustration eines Verfahrens gemäß einer Ausführungsform.

Gleiche oder äquivalente Elemente sind in allen Figuren mit denselben Bezugszeichen bezeichnet und zum Teil nicht gesondert beschrieben.

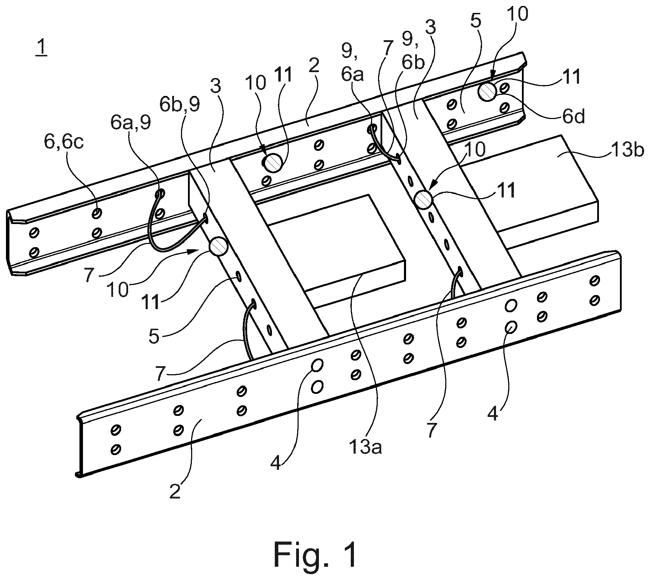

Figur 1 zeigt einen Trägerrahmen 1 eines Nutzfahrzeugs gemäß einer Ausführungsform der Erfindung. In Figur 1 dargestellt ist lediglich ein Teil des Trägerrahmens 1, umfassend zwei voneinander beabstandete und über mehrere Querträger 3 miteinander verbundene RahmenLängsträger 2. Der Trägerrahmen umfasst weitere, nicht dargestellte Querträger, z. B. einen Schlussquerträger. Die Querträger 3 sind jeweils kraftschlüssig über Mutter-Schraube-Verbindungen 4 an den Rahmen-Längsträgern befestigt.

Die Rahmen-Längsträger 2 können beispielsweise C-Profilträger sein. Der Trägerrahmen 1, insbesondere die Rahmen-Längsträger 2 und die Querträger 3, weisen eine rasterförmige Lochstruktur (Lochmaske) 5 auf. Die Lochstruktur 5 umfasst rasterförmig angeordnete Durchgangsöffnungen 6 mit unterschiedlichen Gewindegängen, z. B. der Größe M8 oder M10, die als Anbindungspunkte für zu befestigende Komponenten, wie Aufbauten, elektrische Komponenten, Fahrwerksstrukturen etc. dienen. Die Durchgangsöffnungen werden allgemein mit dem Bezugszeichen 6 bezeichnet. Zur besseren Unterscheidung werden für bestimmte Durchgangsöffnungen die Bezugszeichen 6a - 6d verwendet, wie es nachfolgend beschrieben ist. Der Trägerrahmen 1 ist mit einer Schutzbeschichtung, z. B. mit einer Lackierung, versehen. Die Beschichtung schützt den Trägerrahmen 2, um eine Korrosion aufgrund von Umwelteinflüssen zu vermeiden. Diese Beschichtung wirkt ferner elektrisch isolierend.

Eine Besonderheit des Trägerrahmens 1 ist, dass die mehreren Querträger 3 mit den RahmenLängsträgern 2 elektrisch leitend verbunden sind, um zur Masseanbindung von elektrischen Komponenten ein gemeinsames elektrisches Bezugspotential des Trägerrahmens zu schaffen.

Hierbei ist jeder der Querträger 3 mittels zweier Verbindungselemente 7 mit den RahmenLängsträgern 2 elektrisch leitend verbunden. Die Verbindungselemente 7 sind in der gezeigten Ausführungsform als eine elektrisch isolierte, flexible Leitung, z. B. hier ein Kabel, ausgeführt. Diese Kabel 7 sind in ihren Verbindungsstellen 9 am Trägerrahmen 1 befestigt. Insbesondere sind die Kabel 7 an einem Ende am jeweiligen Querträger 3, dort im Bereich der Durchgangsöffnung 6b und am anderen Ende am jeweiligen Rahmen-Längsträger 2, dort im Bereich der Durchgangsöffnung 6a befestigt, z. B. mittels jeweils einer Masseschraube, die in einer Durchgangsöffnung 6a, 6b befestigt ist.

Die Kabelenden des Verbindungselements 7 sind an den gegenüberliegenden Schenkelflächen eines 90°-Winkelbereichs des Trägerrahmens 1 befestigt, den ein Querträger 3 endseitig mit einem der Rahmen-Längsträger 2 ausbildet, so dass kurze Kabellängen zur Herstellung der elektrischen Verbindung ausreichen. Die Kabellängen sind jedoch ausreichend lang gewählt, um in Bezug auf eine Torsion des Trägerrahmens 1 eine torsionsfeste elektrische Verbindung zwischen einem Querträger 3 und einem Rahmen-Längsträger 2 auszubilden.

Die Beschichtung des Trägerrahmens 1 weist in Bereichen der Befestigungsstellen 9 der Verbindungselemente 7 beschichtungsfreie Stellen auf. Diese können beispielsweise dadurch erzeugt werden, dass vor der Beschichtung des Trägerrahmens in die Durchgangsöffnungen 6a, 6b jeweils ein Verschlussstopfen eingesetzt wird, so dass der Gewindegang und eine Randfläche der Durchgangsöffnungen 6a, 6b nicht beschichtet wird. Alternativ kann z. B. die Masseschraube zur Befestigung der Kabels 7 als selbstschneidende Masseschraube ausgeführt sein, die die beschichtungsfreie Stelle mittels eine Mutter-Schraube-Verbindung 12 erzeugt. Beispielsweise dadurch, dass die Masseschraube als Mutter-Schraube-Verbindung ausgebildet ist, die mittels einer selbstschneidenden Schraube eine Lackschicht in einem Gewindegang entfernt und/oder bei einem Anzug der Mutter mit einem bestimmten Drehmoment eine Beschichtung entfernen oder durchbrechen kann.

Die beschichtungsfreien Stellen stellen einen guten elektrischen Kontakt der Kabel an deren Befestigungsstellen 9 am Trägerrahmen sicher.

Da die Querträger 3 mit den Rahmenlängsträgern 2 sicher elektrisch leitend verbunden sind, können nun sowohl an den Rahmen-Längsträgern 2 als auch an den Querträgern 3 Masseanschlussstellen 10 vorgesehen werden. Entsprechend sind sowohl an den Rahmenlängsträgern 2 und den Querträgern 3 elektrische Masseanschlussstellen 10 vorgesehen, die jeweils an einer beschichtungsfreien Durchgangsöffnung 6d der rasterförmigen Lochstruktur 5 des Trägerrahmens 1 vorgesehen sind. Die beschichtungsfreien Durchgangsöffnungen 6d können analog wie die beschichtungsfreien Durchgangsöffnungen 6a, 6b erzeugt werden, wie es vorstehend beschrieben wurde. Ferner weist die Lochstruktur normal beschichtete Durchgangsöffnungen 6c auf, die nicht als Masseanschlussstellen genutzt werden.

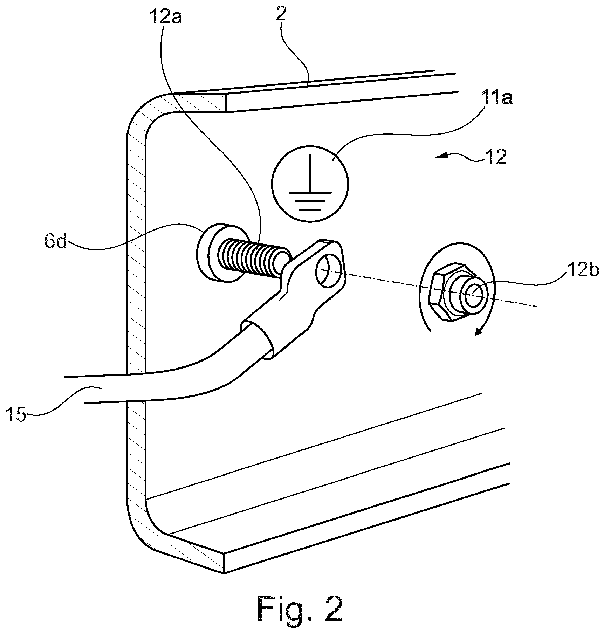

Diejenigen Masseanschlussstellen 10, die (noch) nicht in Gebrauch sind, d. h. Masseanschlussstellen 10 ohne eine daran elektrisch angeschlossene Komponente, können jeweils durch einen elektrisch nichtleitenden Verschlussstopfen 11 abgedeckt sein, der in der der jeweiligen Masseanschlussstelle 10 zugeordneten Durchgangsöffnung 6d lösbar gehaltert ist. Um die so verschlossene Masseanschlussstelle 10 zu nutzen, wird der Verschlussstopfen 11 entfernt und stattdessen in die Durchgangsöffnung 6d z. B. eine Masseschraube bzw. ein Massebolzen eingesetzt, an die ein Massekabel 15 angeschlossen werden kann, was in Figur 2 gezeigt ist.

Die Massenschraube 12 weist ein Außengewinde 12a, z. B. ein M10-Außengewinde, am Schraubenflansch zum Anschluss von Kabeln 15 auf. Die Mutter 12b wird mit einem vorgegebenen Drehmoment, z. B. 30 Nm +/- weniger Nm angezogen. Die Mutter 12b kann als selbstsichernde Mutter, z. B. eine M10-Mutter aus Edelstahl mit Verriegelung verwendet werden. Ferner kann der Trägerrahmen 1 im Bereich der Befestigungsstellen 9 und/oder der Masseanschlussstellen 10 eine Markierung 11a zur Kennzeichnung aufweisen, was z. B. in Figur 2 dargestellt ist. Die Markierung kann lediglich beispielhaft ein Erdungs-Symbol sein.

An den Masseanschlussstellen können nun elektrische Komponenten 13, insbesondere HV-Komponenten 13 mit dem Bezugspotential verbunden werden.

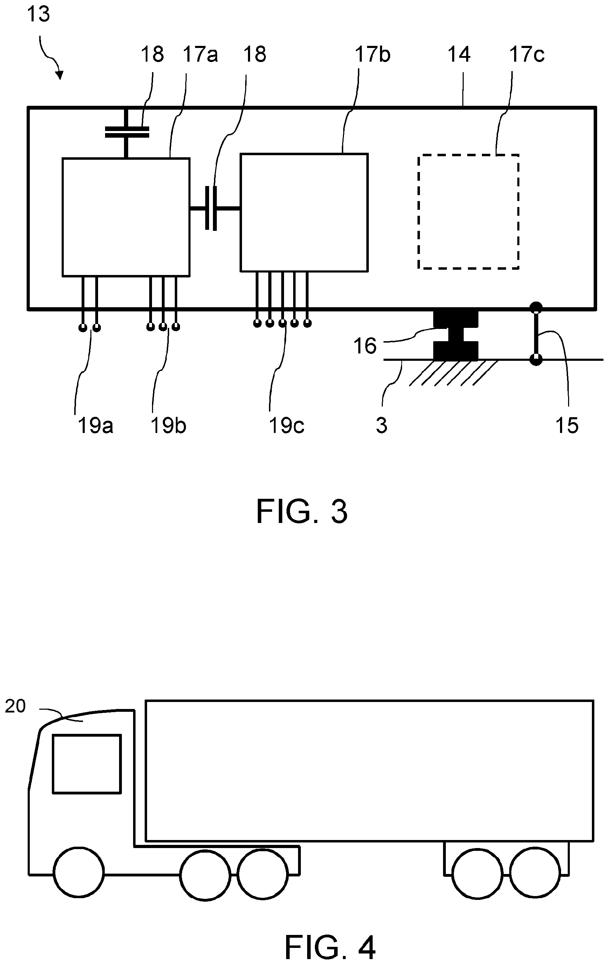

Figur 3 zeigt schematisch und lediglich beispielhaft den Aufbau einer HV-Komponente 13 und deren Anbindung an ein Bezugspotential (GND). Die in Figur 3 gezeigte HV-Komponente ist Teil eines HV-Netzes des Nutzfahrzeugs 20 (siehe Figur 4). Das für HV-Komponenten verwendete Hochvolt-Netz, HV-Netz, ist in der Regel ein vollständig isoliertes Netz, ähnlich einem IT (Isole terre) -Netz. D. h. weder Plus- noch Minuspol des HV-Systems haben eine leitfähige Verbindung zur Fahrzeugmasse (Fahrgestell) oder zur Erde.

Das isolierte Netz ist ein elektrisches Netz mit einer erhöhten Ausfall- und Unfallsicherheit bei Fehlern der Isolation (ähnlich IT-Netz). Ein erster Isolationsfehler zwischen einem Leiter und dem Gehäuse bzw. der Karosserie führt nicht automatisch zu einer Gefährdung. Es entsteht weder eine gefährliche Berührungsspannung zwischen leitfähigen Gehäusen und der Erde noch ein über die Karosserie geschlossener Stromkreis zur Antriebsbatterie. Der Erstfehler hat daher noch keine schädlichen Auswirkungen, daher muss das elektrische System des Fahrzeuges auch noch nicht abgeschaltet werden. In der Regel prüft ein on-board "ISO-Wächter" regelmäßig oder permanent den Isolationswiderstand zwischen dem Hochvoltkreis und der Fahrzeugmasse (Karosserie). Somit kann ein Isolationswächter feststellen, ob es einen Isolationsfehler gibt bzw. Strom fließt. Damit ist der Iso-Wächter der Auslöser, um die Schütze bei der HV-Batterie bzw. dem HV-Verteiler auf zu machen und den Strom zu trennen. Ein Isolationsfehler wird dem Fahrer gemeldet. Ein festgestellter Fehler muss umgehend behoben werden, da ein Isolationsfehler des zweiten Leiters einen Kurzschluss zur Folge hätte, der zum Auslösen der Überstromschutzeinrichtung und damit zum sofortigen Abschalten des Fahrzeugs führen würde. Der Iso-Wächter kann in die HV-Batterie integriert sein oder separat verbaut sein. Das HV-Netzt selbst und der ISO-Wächter ist z. B. in der Darstellung der Figur 1 nicht dargestellt, sondern nur beispielhaft zwei elektrische HV-Komponenten 13a, 13b, um das Grundprinzip der Erfindung zu illustrieren.

Zum Schutz vor einem elektrischen Schlag wird jedoch bei HV-Komponenten eines solchen HV-Systems eine gemeinsame Verbindung von leitfähigen Gehäuseteilen 14 der HV-Komponenten zum Potentialausgleich hergestellt. Es müssen somit zusätzlich die Gehäuseteile von HV-Komponenten mit einem Masseanschluss verbunden werden.

Dies ist in Figur 3 illustriert. Die HV-Komponente 13 umfasst hier beispielhaft eine Hochvolt, HV,-Elektrik 17a (z. B. die Wicklung der E-Maschine) mit einen HV-DC-Anschluss 19a und einem HV-AD-Anschluss (drei Phasen) 19b, eine Niedervolt, NV, -Elektrik 17b mit einem NV-Anschluss 19c, der mit einer Nennspannung von 12V oder 24 V betrieben wird, z. B. eine Sensorik oder Steuerelektronik, und eine Mechanik 17c. Die HV-Elektrik 17a weist eine galvanische Trennung 18 vom Gehäuse 14 der HV-Komponente 13 auf und eine galvanische Trennung 18 von der NV-Elektrik 17b. Die elektrische Komponente 13 bzw. deren Gehäuse 14 ist mit einer mechanischen Befestigung 16 an Trägerrahmen, z. B. an einem Querträger 3, befestigt, beispielsweise in dem das Gehäuse direkt mittels Mutter-Schraube-Verbindung montiert wird oder in dem die Komponente 13 mittelbar über einen Trägerrahmen oder eine andere Befestigungsstruktur am Trägerrahmen befestigt wird. Wichtig für die elektrische Sicherheit ist jedoch, dass eine Massenanbindung (Potentialausgleich) 15 von Gehäuse 14 mit dem gemeinsamen Bezugspotential vorgesehen wird, z. B. in dem ein Massekabel das Gehäuse 14 mit einer Masseanschlussstelle 10 elektrisch leitend verbindet.

Die Kabel des Potentialausgleiches 15 müssen so ausgelegt sein, dass diese den Strom bis zum Trennen des Stromes (HV-Batterie/ HV-Verteiler) tragen können, ohne dass es zu einem Brand oder einer Atomisierung der Kabel kommt.

Zurückkommend zur Figur 1 sind dort beispielhaft zwei HV-Komponenten 13a und 13b gezeigt, die an unterschiedlichen Querträgern 3 gehaltert sind. Bei der Komponente 13a kann es sich z. B. um einen Traktionsenergiespeicher (Batteriemodul) handeln. Die HV-Batterien können hierbei vorgruppiert werden und diese Struktur mittels Querstreben (nicht dargestellt) an den Querträger (und/ oder auch Rahmen-Längsträger) montiert werden. Das Gehäuse des Batteriemoduls und auch die Querstreben werden dann am Trägerrahmen, vorzugsweise direkt am Querträger, der die Struktur trägt, über einen Masseanschluss 10 mit dem gemeinsamen Bezugspotential verbunden (in Figur 1 nicht dargestellt).

Die Komponente 13b kann ein Hochvolt, HV,-Verteiler sein. Ein Hochvoltverteiler (englisch "High Voltage Distribution (HVD) unit/module") ist eine Hochspannungsverteilungseinrichtung, die mittels einer Leiteranordnung zur Strom- und Spannungsverteilung ausgebildet ist. Die Funktion des Hochvoltverteilers ist die Strom- und Spannungsversorgung anderer Hochvolt-komponenten im gesamten elektrifizierten Antriebsstrang, wie z. B. elektrischer Nebenaggregate verschiedener Leistungsklassen oder Antriebseinheiten. Weiterhin ist der Hochvoltverteiler Träger von Hochvolt-Absicherungsmaßnahmen, z. B. Schmelzsicherungen, Halbleiterschutzelementen, Schützen etc. Ein solcher Hochvoltverteiler wird beispielsweise bei Hybridoder Elektrofahrzeugen im Hochspannungsbordnetz, an das ein elektrischer Traktionsenergiespeicher und ein elektromotorischer Antrieb angeschlossen sind, eingesetzt. Über die Leitungsanordnung des Hochvoltverteilers kann somit Energie aus dem elektrischen Energiespeicher zum Antrieb des Fahrzeugs an ein Hauptaggregat und zur Versorgung von Nebenaggregaten bereitgestellt werden. Ferner kann über die Leitungsanordnung des Hochvoltverteilers elektrische Energie aus dem Antriebsstrang aufgenommen und an den elektrischen Energiespeicher weitergeleitet werden.

Das Gehäuse des HV-Verteilers 13b wird direkt an demjenigen Querträger 3, der den HV-Verteiler 13b trägt, über einen dort vorgesehenen Masseanschluss 10 mit dem gemeinsamen Bezugspotential elektrisch leitend verbunden (in Figur 1 nicht dargestellt).

Entsprechend können lange Masseleitungen zu entfernten Masseanschlussstellen, wie es ansonsten vonnöten wäre, vermieden werden.

In dem den Trägerrahmen 1 aufweisenden Nutzfahrzeug 20 sind ferner weitere elektrische Komponenten in ähnlicher Weise am Trägerrahmen 1 gehaltert und dort jeweils mit der zu der jeweiligen Komponente nächstliegenden Masseanschlussstelle 10 elektrisch verbunden. Hierbei können diese Komponenten z. B. einen Hochvolt-Heizer, einen Bordnetzladewandler, ein Steuergerät, und eine elektrische Traktionsmaschine umfassen.

Bei dem Trägerrahmen 1 kann die Hochvolt, HV,-Verkabelung, die in Längsrichtung der Rahmen-Längsträger verläuft, jeweils entlang eines der Rahmen-Längsträger 2 verlaufen, während die entsprechende Niedervolt, NV,-Verkabelung entlang des anderen Rahmen-Längsträgers 2 verläuft, wodurch elektromagnetische Störeffekte reduziert und die elektromagnetische Verträglichkeit (EMV) verbessert werden.

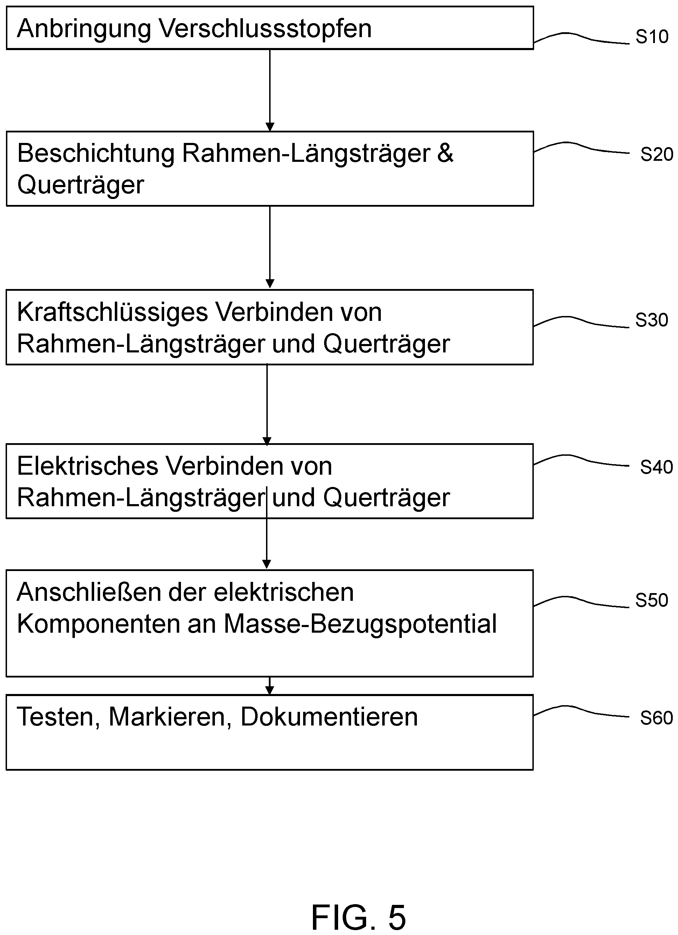

Figur 5 zeigt ein Ablaufdiagram zur Illustration eines Verfahrens zur Bereitstellung von Masseanschlüssen an einem Trägerrahmen für ein Nutzfahrzeug gemäß einer Ausführungsform.

In einem ersten Schritt S10 werden an den beiden Rahmenlängsträgern 2 und den Querträgern 3, die später einen Trägerrahmen bilden sollen, an mehreren Stellen Verschlussstopfen 11 angebracht. Hierbei wird vorab festgelegt, wo später Massenanschlussstellen 10 an den beiden Rahmenlängsträgern 2 und den Querträgern 3 bereitgestellt werden sollen. In den diesen Massenanschlussstellen 10 zugeordneten Durchgangsöffnungen 6 der Lochstruktur 5 wird jeweils ein Verschlussstopfen eingesetzt. Auch in Durchgangsöffnungen 6a, 6b an den Verbindungsstellen 9, die für die elektrisch leitende Verbindung von Querträgern mit den Rahmen-Längsträgern vorgesehen sind, werden Verschlussstopfen eingesetzt.

Im nächsten Schritt S20 erfolgt in an sich bekannterweise eine Beschichtung, z. B. Lackierung der Rahmen-Längsträger 2 und der Querträger 3. Im nächsten Schritt S30 erfolgt die kraftschlüssige Verbindung der Querträger 3 mit den beiden Rahmenlängsträgern durch Mutter-Schraubverbindungen 4.

Im nächsten Schritt S40 werden dann die Querträger 3 elektrisch leitend mit den Rahmenlängsträgern 2 verbunden, z. B. über die Kabel, wie es vorsehend in Zusammenhang mit Figur 1 beschrieben wurde, wobei zuvor die Verschlussstopfen aus den Durchgangsöffnungen 6a, 6b entfernt werden.

Anschließend (oder auch davor) können im Schritt S50 die elektrischen Komponenten an den Trägerrahmen montiert und an das Masse-Bezugspotential angeschlossen werden. Hierzu werden die Verschlussstopfen 11 an den Masseanschlussstellen 10 entfernt, die hierfür benötigt werden. Nach der Montage der elektrischen Komponenten 13 wird im Schritt S60 eine Prüfung durchgeführt, ob die hergestellten elektrischen Verbindungen (Massenanbindungen und elektrische Verbindungen zwischen Quer- und Rahmen-Längsträgern) elektrisch leitend sind. Wenn dies nicht der Fall ist, muss ggf. aufwendig nachgearbeitet werden. Die Messergebnisse können gespeichert und dokumentiert werden, z. B. pro Fahrzeug und für jede an das Bezugspotential angeschlossene elektrische Komponente inkl. deren Einbaulage. Die Montage der HV-Komponenten an den Trägerrahmen 1 erfolgt vorzugsweise mittels selbstsichernder Muttern, welche aufgrund der galvanischen Spannungsreihe nur gering oder gar nicht korrodieren, z. B. Edelstahl bei Stahlträgern). Die Oberfläche der Befestigungselemente der HV-Gehäuse ist zweckmäßig gegen Korrosion und Umwelteinflüsse zu schützen.

Die Verbindungselemente und/oder Massenanschlussstellen können markiert werden, z. B. mit einem Lackstift.

Zusammenfasst wird somit ein Trägerrahmen bereitgestellt, dessen Quer- und Rahmenlängsträger auf einem gemeinsamen elektrischen Bezugspotential liegen. Dadurch können somit elektrische Komponenten im Prinzip sowohl an den Querträgern als auch an den RahmenLängsträgern an das Masse-Bezugspotential angeschlossen werden, sofern geeignete Massenanschlussstellen vorgesehen sind oder vorgesehen werden. Entsprechend können elektrische Komponenten bevorzugt direkt an ihrer Montagestelle am Trägerrahmen oder zumindest möglichst nahe zu dieser Montagestelle mit dem Bezugspotential verbunden werden, wodurch entsprechend lange Kabellängen und eine aufwändige Sterntopologie zum Anschließend der elektrischen Komponenten an das Bezugspotential vermieden werden können.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Trägerrahmen
- 2: Rahmen-Längsträger
- 3: Querträger
- 4: Kraftschlüssige Befestigung des Querträgers am Rahmenlängs-Träger
- 5: Lochstruktur
- 6: Durchgangsöffnung
- 6a, 6b: Durchgangsöffnung am Verbindungselement
- 6c: Durchgangsöffnung (beschichtet)
- 6d: Durchgangsöffnung (beschichtungsfrei)
- 7: Verbindungselement, z. B. Kabel
- 8: Mutter-Schraube-Verbindung
- 9: Befestigungsstelle des Verbindungselements
- 10: Masseanschlussstelle
- 11: Verschlussstopfen
- 11a: Markierung
- 12: Mutter-Schraube-Verbindung, Masseschraube
- 12a: Außengewinde
- 12b: Mutter
- 13: Elektrische Komponente
- 13a: Elektrische Komponente, z. B. Traktionsenergiespeicher
- 13b: Elektrische Komponente, z. b. HV-Verteiler
- 14: Gehäuse der elektrischen Komponenten
- 15: Masseanbindung
- 16: Mechanische Befestigung
- 17a: Hochvolt-Elektrik
- 17b: Niedervolt-Elektrik
- 17c: Mechanik
- 18: Galvanische Trennung
- 19a: HV-Anschluss DC
- 19b: HV-Anschluss AC
- 19c: NV-Anschluss
- 20: Nutzfahrzeug

## Patentansprüche

1. Trägerrahmen (1) für ein Nutzfahrzeug, umfassend zwei voneinander beabstandete und über mehrere Querträger (3) miteinander verbundene Rahmen-Längsträger (2), wobei die mehreren Querträger (3) mit den Rahmen-Längsträgern (2) elektrisch leitend verbunden sind, vorzugsweise zur Erzeugung eines gemeinsamen elektrischen Bezugspotentials des Trägerrahmens (1).

2. Trägerrahmen (1) nach Anspruch 1, wobei jeder der Querträger (3) mittels zweier Verbindungselemente (7) mit den Rahmen-Längsträgern (2) elektrisch leitend verbunden ist.

3. Trägerrahmen (1) nach Anspruch 2, wobei die Verbindungselemente (7) jeweils
a) eine nicht-tragende und/oder in Bezug auf eine Torsion des Trägerrahmens (1) torsionsfeste elektrische Verbindung zwischen einem Querträger (3) und einem Rahmen-Längsträger (2) ausbilden; und/oder
b) als eine elektrisch isolierte, flexible Leitung und/ oder ein Kabel ausgeführt sind; und/oder
c) an einer Durchgangsöffnung (6a) am Rahmenlängsträger (2) und an einer Durchgangsöffnung (6b) am Querträger (3) verstiftet und/oder verschraubt und/oder vernietet sind, wobei die Durchgangsöffnungen Teil einer rasterförmigen Lochstruktur (5) des Trägerrahmens (1) sind.

4. Trägerrahmen (1) nach einem der vorhergehenden Ansprüche, wobei an den Rahmenlängsträgern (2) und zumindest einem Teil der Querträger (3) elektrische Masseanschlussstellen (10) vorgesehen sind, die jeweils an einer Durchgangsöffnung einer rasterförmigen Lochstruktur (5) des Trägerrahmens (1) vorgesehen sind.

5. Trägerrahmen (1) nach Anspruch 4, wobei Masseanschlussstellen (10) ohne eine daran elektrisch angeschlossene Komponente jeweils durch einen elektrisch nichtleitenden Verschlussstopfen (11) abgedeckt sind, der in der der jeweilige Masseanschlussstelle zugeordneten Durchgangsöffnung lösbar gehaltert ist.

6. Trägerrahmen (1) nach einem der Ansprüche 2 bis 4, wobei eine Beschichtung des Trägerrahmens im Bereich der elektrischen Masseanschlussstellen (10) und von Befestigungsstellen der Verbindungselemente (7) eine beschichtungsfreie, vorzugsweise lackierungsfreie, Stelle aufweist.

7. Trägerrahmen (1) nach Anspruch 6, wobei die beschichtungsfreie Stelle mittels einer Mutter-Schraube-Verbindung (12) erzeugt ist, wobei die Mutter-Schraube-Verbindung (12) ausgebildet ist, mittels einer selbstschneidenden Schraube eine Lackschicht in einem Gewindegang zu entfernen und/oder bei einem Anzug der Mutter (12b) mit einem bestimmten Drehmoment eine Beschichtung zu entfernen und/oder zu durchbrechen.

8. Trägerrahmen (1) nach einem der Ansprüche 2 bis 7, wobei der Trägerrahmen (1) im Bereich der Befestigungsstellen (9) und/oder der Masseanschlussstellen (11) eine Markierung (11a) zur Kennzeichnung aufweist.

9. Nutzfahrzeug (20), aufweisend einen Trägerrahmen (1) nach einem der vorhergehenden Ansprüche.

10. Nutzfahrzeug (20) nach Anspruch 9, umfassend mehrere elektrische Komponenten (13), die über elektrische Masseanschlussstellen am Trägerrahmen mit einem gemeinsamen Bezugspotential elektrisch verbunden sind, wobei die mehreren elektrischen Komponenten
a) zumindest eine erste Komponente (13a, 13b) aufweist, die an einem der Querträger mechanisch gehaltert ist und mit dem gemeinsamen Bezugspotential über eine an diesem Querträger angeordnete Masseanschlussstelle elektrisch verbunden ist; und/oder
b) zumindest eine zweite Komponente aufweist, die am einem der Rahmen-Längsträger mechanisch gehaltert ist und mit dem gemeinsamen Bezugspotential über eine im Bereich oder benachbart zu ihrer Halterung am Rahmenlängsträger angeordnete Masseanschlussstelle elektrisch verbunden ist.

11. Nutzfahrzeug nach Anspruch 10, wobei die mehreren Komponenten zumindest eine der folgenden Komponenten aufweist: eine mittels einer Rahmenstruktur an den Trägerrahmen befestigte Hochvolt-Traktionsbatterie (13a), einen Hochvoltverteiler (13b), einen Hochvolt-Heizer, einen Bordnetzladewandler, ein Steuergerät, und eine elektrische Traktionsmaschine.

12. Verfahren zur Bereitstellung von Masseanschlüssen an einem Trägerrahmen für ein Nutzfahrzeug, umfassend zwei voneinander beabstandete Rahmen-Längsträger (2) und mehrere Querträger (3), umfassend den Schritt:
Elektrisch leitendes Verbinden (S40) der mehreren Querträger (3) mit den RahmenLängsträgern (2) zur Sicherstellung eines Potentialausgleichs zwischen RahmenLängsträgern und Querträger.

13. Verfahren nach Anspruch 12, wobei jeder Querträger (3) mittels zweier Verbindungselemente (7) mit den Rahmen-Längsträgern elektrisch leitend verbunden wird, wobei die Verbindungselemente (7) jeweils
a) eine nicht-tragende und/oder in Bezug auf eine Torsion des Trägerrahmens torsionsfeste elektrische Verbindung zwischen einem Querträger und einem RahmenLängsträger ausbilden; und/oder
b) als eine elektrisch isolierte, flexible Leitung und/ oder ein Kabel ausgeführt sind; und/oder
c) an einer Durchgangsöffnung am Rahmenlängsträger und an einer Durchgangsöffnung am Querträger verstiftet und/oder verschraubt und/oder vernietet sind, wobei die Durchgangsöffnungen Teil einer rasterförmigen Lochstruktur des Trägerrahmens sind.

14. Verfahren nach Anspruch 12 oder 13, wobei vor einem Beschichtungsvorgang, vorzugsweise vor einer Lackierung, der Rahmen-Längsträger und der Querträger in mehrere Durchgangsöffnungen, die Teil einer rasterförmigen Lochstruktur (5) des Trägerrahmens sind, und die als Masseanschlussstellen (10) vorgesehen sind, jeweils ein Verschlussstopfen (11) lösbar eingebracht wird (S10), um zu verhindern, dass eine Innenwandung der Durchgangsöffnung, vorzugsweise ein Gewindegang, und/oder ein die Durchgangsöffnung umgebender Randbereich beim Beschichtungsvorgang beschichtet wird.

15. Verfahren nach Anspruch 14, ferner umfassend das Entfernen mindestens eines Verschlussstopfens zur Bereitstellung einer Masseanschlussstelle und Herstellen einer Masseverbindung (S50) einer elektrischen Komponente an der bereitgestellten Massenanschlussstelle, vorzugsweise mittels einer Masseschraube, die ein Außengewinde am Schraubenflansch zum Anschluss von Kabeln aufweist.
